# EUROPEAN PATENT APPLICATION

(11) **EP 3 940 882 A1**
(43) Date of publication of application: **19.01.2022**
(21) Application number: 21155678.2
(22) Date of filing: 08.02.2021
(51) Int. Cl.: H01M 50/528, H01M 50/536, H01M 50/538, H01M 50/54, H01M 50/566

(54) **BATTERY AND MANUFACTURING METHOD OF BATTERY**

(30) Priority: 15.07.2020 CN 202010679046; 19.11.2020 CN 202011304662
(71) Applicant: CHINA LITHIUM BATTERY TECHNOLOGY CO., LIMITED, Henan Province (CN); CALB Technology Co., Ltd., Changzhou City, Jiangsu Province (CN)
(72) Inventor: Qi, Binwei, Luoyang City, Henan Province (CN); ZHANG, Yongjie, Luoyang City, Henan Province (CN); XU, Jiuling, Changzhou City, Jiangsu Province (CN)
(74) Representative: Becker, Eberhard

(57) **Abstract**

The invention relates to the technical field of batteries, and provides a battery and a manufacturing method of battery. The battery includes a main body portion and a tab. The tab is arranged on the main body portion. The tab includes a first welding mark and a second welding mark. The second welding mark covers at least a part of the first welding mark. By forming the first welding mark and the second welding mark on the tab, and the second welding mark covers at least part of the first welding mark, that is, when the tab is welded with the cover element, the tab is welded twice.

## Description

### BACKGROUND

### Field of the Disclosure

The disclosure relates to the technical field of batteries, in particular to a battery and a manufacturing method of battery.

### Description of Related Art

A battery typically includes an electrode assembly (body and tab) and a top cover assembly. The top cover element is connected with the tab to electrically connect the electrode assembly and an external device.

However, in the related art, the connection between the tab and the top cover element is directly achieved by welding. In order to ensure the reliable connection between the tab and the top cover element, the energy adopted for welding is typically high, but due to the limitation of the structure of the tab itself, excessive energy often causes damage to the tab during welding, which affects reliability of the connection.

### SUMMARY OF THE DISCLOSURE

The disclosure provides a battery and a manufacturing method of battery.

According to the first aspect of the disclosure, the battery is provided and includes a main body portion, and a tab arranged on the main body portion. The tab includes a first welding mark and a second welding mark, and the second welding mark covers at least a part of the first welding mark.

In the battery of the embodiment of the disclosure, a first welding mark and a second welding mark are formed on the tab, and the second welding mark covers at least a part of the first welding mark, that is, when the tab is welded with the cover element, the tab is welded twice.

According to the second aspect of the disclosure, a manufacturing method of battery is provided, including following steps. A tab on the main body portion is pre-welded to form a first welding mark on the tab. A pole of a cover element and the tab are welded to form a second welding mark on the tab, and the second welding mark is formed to cover at least a part of the first welding mark; or, a connecting portion of the cover element and the tab are welded to form a second welding mark on the tab and the second welding mark is formed to cover at least a part of the first welding mark.

In the manufacturing method of battery in the embodiment of the disclosure, a first welding mark is formed by pre-welding the tab, and the cover element and the tab are welded on the first welding mark to form a second welding mark, that is, the tab is welded twice.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic diagram showing a first welding mark structure of a battery according to an exemplary embodiment.
FIG. 2 is a schematic diagram showing a first insulating layer structure of a battery according to an exemplary embodiment.
FIG. 3 is a schematic structural diagram of a battery according to an exemplary embodiment.
FIG. 4 is a schematic diagram showing a first welding mark structure of a battery according to another exemplary embodiment.
FIG. 5 is a schematic diagram showing a first insulating layer structure of a battery according to another exemplary embodiment.
FIG. 6 is a schematic structural diagram showing a battery according to another exemplary embodiment.

### DESCRIPTION OF EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

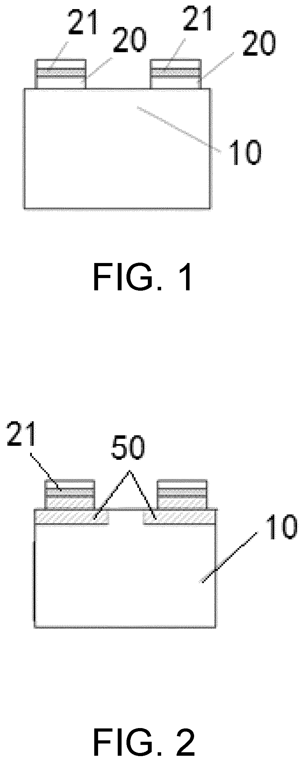

An embodiment of the disclosure provides a battery. Please refer to FIG. 1 to FIG. 6. The battery includes a main body portion 10 and a tab 20. The tab 20 is arranged on the main body portion 10, and the tab 20 includes a first welding mark 21 and a second welding mark 22. The second welding mark 22 covers at least a part of the first welding mark 21.

The battery according to an embodiment of the disclosure has the first welding mark 21 and the second welding mark 22 formed on the tab 20, and the second welding mark 22 covers at least a part of the first welding mark 21, that is, when the tab 20 is welded to the cover element, the tab 20 is welded twice, so that the energy of welding can be better controlled and damage to the tab 20 can be avoided.

It should be noted that the second welding mark 22 covers at least a part of the first welding mark 21, that is, after the first welding mark 21 is formed by the first welding, when the second welding is performed, the welding is still performed in the region of the first welding mark 21, so that the second welding mark 22 can be formed on the first welding mark 21. Certainly, the disclosure does not exclude the embodiment in which the part of the second welding mark 22 is outside the first welding mark 21.

It should be noted that, if the part of the second welding mark 22 is located between the first welding mark 21 and the main body portion 10, damage will be caused to the tab 20 between the first welding mark 21 and the main body portion 10 (for example, the tab 20 might be torn or melted), which consequently will cause the main body portion 10 to fail to charge and discharge well, and the impedance of the battery will increase, which seriously affects the performance of the battery. However, if the part of the second welding mark 22 is located outside the first welding mark 21 away from the main body portion, it will not affect the charging and discharging performance of the main body portion 10 as well as the performance of battery. When a higher level of energy is adopted to form the second welding mark 22, the tab 20 outside the first welding mark can be cut off to shape the tab 20, which simplifies the process and reduces the cost. In an embodiment, the tab 20 includes a plurality of metal sheets. The metal sheets are thin metal sheets. The thin metal sheets may serve as a part of the current collector, or other options are available, the disclosure provides no limitation thereto. The first welding mark 21 can be formed by directly pre-welding the tab 20, that is, before the tab 20 and the cover element are welded, the tab 20 is pre-welded, so that two or more thin metal sheets of the tab 20 are combined together, which also improves the structural strength of the tab 20 to a certain extent. Certainly, if all the thin metal sheets of the tab 20 are combined together, the strength of the tab 20 is higher. Accordingly, when the tab 20 is welded to the cover element, even if the energy of welding is relatively high, due to the presence of the first welding mark 21 and the second welding mark 22 is formed on basis of the first welding mark 21, the first welding mark 21 strengthens the tab 20, so that the probability of damage to the tab 20 during the second welding is significantly reduced.

In an embodiment, the first welding mark 21 may perform pre-welding to the tab 20 and the cover element, that is, by performing a single welding with a relatively low welding energy, the thin metal sheets of the tab 20 are combined together. Certainly, the tab 20 and the cover element are also connected, and then by performing the second welding with relatively high welding energy, the tab 20 and the cover element are connected stably, and the second welding mark 22 is formed on the first welding mark 21. Due to the presence of the first welding mark 21, and the second welding mark 22 is formed on basis of the first welding mark 21, even if the energy of welding is relatively high, since the first welding mark 21 enhances the strength of the tab 20, when the second welding is performed, the probability of causing damage to the tab 20 is significantly reduced.

In an embodiment, the first welding mark 21 and the second welding mark 22 are sequentially formed, that is, in the process of forming the second welding mark 22, since the second welding mark 22 is performed within the first welding mark 21, even if the energy of welding is relatively high, since the first welding mark 21 increases the strength of the tab 20, damage to the tab 20 can be avoided.

In an embodiment, the second welding marks 22 are all located in the first welding mark 21, that is, damage to the tab 20 is minimized. It should be noted that the second welding marks 22 are all located in the first welding mark 21, that is, after the first welding mark 21 is formed, the second welding needs to be performed, and it is necessary to ensure that the welding region aligned with the second welding is located in the first welding mark 21. Here, the welding region of the tab 20 is the main focus, and the welding region of the cover element is not taken into consideration, that is, the tab 20 is used as a reference for welding. In fact, the second welding mark 22 is formed when the tab 20 is welded to the cover element.

In an embodiment, the second welding mark 22 is located in a middle portion of the first welding mark 21, so as to ensure that the tab 20 will not be damaged during the second welding.

It should be noted that the middle portion does not specifically refer to a center position, but is described in a sense of being relative to the outer peripheral edge of the first welding mark 21, that is, the second welding mark 22 does not intersect the outer peripheral edge of the first welding mark 21, in which case the second welding mark 22 is located in the middle portion of the first welding mark 21. The distance between the second welding mark 22 and the edge of the first welding mark 21 will affect the quality of welding. Preferably, the distance between the second welding mark 22 and the edge of the first welding mark 21 is ≥1mm. If the distance is less than 1mm, the energy of welding for forming the second welding mark 22 is high, which will affect the tab 20 outside the first welding mark 21 and cause damage to the tab 20 at the outside. More preferably, the distance between the second welding mark 22 and the edge of the first welding mark 21 is ≥ 3mm to completely avoid damage to the tab 20 outside the first welding mark 21. Certainly, in order not to damage the tab 20 between the first welding mark 21 and the main body portion 10 (such as tearing or melting of the tab 20) and affect the performance of the battery, at least it is necessary to ensure that the distance between the second welding mark 22 and the edge of the first welding mark 21 close to the main body portion 10 is ≥1mm, and it is more preferable that the distance between the second welding mark 22 and the edge of the first welding mark 21 close to the main body portion 10 is ≥3mm to completely avoid damage to the tab 20 at the outside of the first welding mark 21. The inventor found through research that the size of the areas of the second welding mark 22 and the first welding mark 21 should be appropriately selected. The preferred ratio of the area of the second welding mark 22 to the area of the first welding mark 21 is 1:20 to 1:2. If the ratio of the area of the second welding mark 22 to the area of the first welding mark 21 is less than 1:20, the welding strength of the tab 20 and the cover element is weak. If the ratio of the area of the second welding mark 22 to the area of the first welding mark 21 is greater than 1:2, the energy of welding for forming the second welding mark 22 is higher and the welding time is longer, and the heat will be conducted to the cover element, leading to the failure of some parts of the cover element (for example, the failure of sealing the pole). More preferably, the ratio of the area of the second welding mark 22 to the area of the first welding mark 21 is 1:10 to 1:5, which can ensure sufficient welding strength between the tab 20 and the cover element without affecting the performance of the cover element.

In an embodiment, the second welding mark 22 is located at the center of the first welding mark 21.

In an embodiment, the first welding mark 21 may have multiple shapes, such as a rectangle, and correspondingly, the second welding mark 22 may have multiple shapes, such as a rectangle.

In an embodiment, the first welding mark 21 may be circular, oval, or irregular in shape, and correspondingly, the second welding mark 22 may be circular, oval, or irregular in shape. The disclosure provides no limitation to the specific shapes of the first welding mark 21 and the second welding mark 22, and their shapes can be selected according to actual requirements.

In an embodiment, the first welding mark 21 accounts for at least a part of the tab 20, and the tab 20 is utilized to perform pre-welding to form the first welding mark 21, that is, before the tab 20 is connected with the cover element, the tab 20 is preprocessed through welding so that the multiple thin metal sheets forming the tab 20 are reliably connected.

Specifically, the tab 20 includes a thin metal sheet. In the related art, when the tab 20 and the cover element are welded, multiple thin metal sheets are laminated together. However, because there is no fixed connection between the adjacent thin metal sheets, when the tab 20 is welded to the cover element, due to the high level of energy, damage will be caused to the thin metal sheets. In the embodiment, by performing pre-welding to the thin metal sheets, a stable connection is formed between the adjacent thin metal sheets, thereby enhancing the strength of the tab 20.

In an embodiment, the first welding mark 21 and the second welding mark 22 are formed by different welding methods, and the tab 20 includes a thin metal sheet with thinner thickness. The thin metal sheet is pre-welded by the first welding method, such that a stable connection is formed between adjacent thin metal sheets, and the strength of the tab 20 is enhanced, thus avoiding the damage to the tab 20. Then, the second welding method is adopted to weld the tab 20 and the cover element, which enhances the connection strength between the tab 20 and the cover element and avoids damage to the tab 20 as well. Different welding methods can mean different types of welding energy, and can mean the same type of welding energy with different strengths.

In an embodiment, the first welding mark 21 and the second welding mark 22 are both laser welding marks; or, the first welding mark 21 and the second welding mark 22 are both ultrasonic welding marks; or, the first welding mark 21 is an ultrasonic welding mark, and the second welding mark 22 is a laser welding mark; or, the first welding mark 21 is a laser welding mark, and the second welding mark 22 is an ultrasonic welding mark.

Specifically, the first welding mark 21 is formed by the first welding, and the second welding mark 22 is formed by the second welding. The first welding method can be performed by adopting any one of ultrasonic welding and laser welding. Correspondingly, the second welding method can be performed by adopting any one of ultrasonic welding and laser welding, as long as the stability of the connection can be ensured and the tab 20 will not be damaged during the first welding.

In an embodiment, the first welding mark 21 is an ultrasonic welding mark, and the second welding mark 22 is a laser welding mark. Specifically, the first welding mark 21 is formed by the first welding, and the second welding mark 22 is formed by the second welding. The first welding method adopts ultrasonic welding. The multiple thin metal sheets of the tab 20 are combined into a whole through ultrasonic effect. It can be considered that the multiple thin metal sheets are formed as a whole to become a thick metal plate, thereby enhancing the strength of the tab 20 and avoiding damage to the tab 20. Correspondingly, the second welding method is performed by adopting laser welding, and the second welding mark 22 is formed on the first welding mark 21. The cover element is welded to the metal plate formed by the first welding. Through the effect of laser, the metal plate formed by the first welding and the cover element are fixedly connected together, which enhances the strength of the connection.

In an embodiment, there are at least two first welding marks 21, and adjacent first welding marks 21 are arranged at intervals, that is, during pre-welding, at least two first welding marks 21 are formed by separate welding. The number of second welding mark 22 can be one or at least two, that is, the second welding mark 22 can correspond to the first welding mark 21 one by one, or can be less than the first welding mark 21, that is, part of the first welding mark 21 is not covered by the second welding mark 22.

In an embodiment, the battery further includes an insulating layer, and at least a part of the insulating layer is disposed on the tab 20. The tab 20 includes a joint portion connected to the main body portion 10. The joint portion can be considered as the root of the tab 20. The first end of the first welding mark 21 is close to the joint portion of the tab 20, and the insulating layer extends from the first end of the first welding mark 21 in a direction away from the first welding mark 21.

Specifically, one end of the insulating layer is docked with one end of the first welding mark 21 close to the root of the tab 20, and the insulating layer extends in a direction away from the first welding mark 21, so that the other end of the insulating layer is spaced apart from the first welding mark 21, so that the insulating layer will not cover the first welding mark 21. In this manner, it can be ensured that when the second welding is performed, the insulating layer will not directly form a part of the welding, thus preventing the insulating layer from interfering with the welding connection (such as the situation of virtual welding, missing welding, etc.).

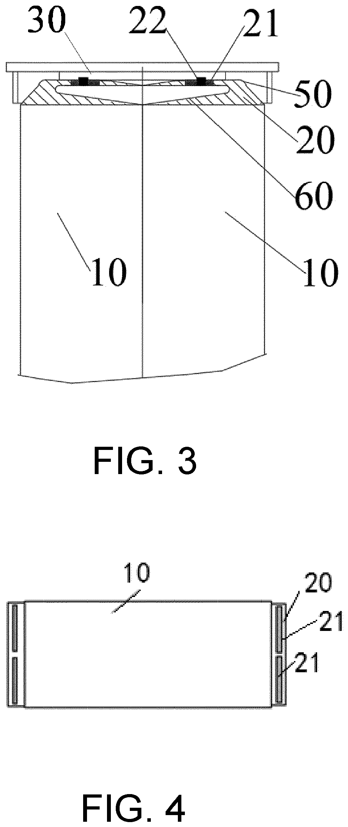

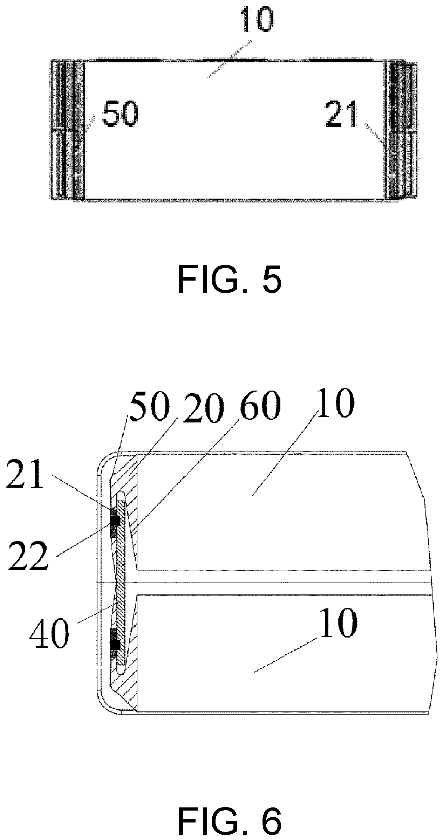

In an embodiment, as shown in FIG. 3 and FIG. 6, the insulating layer includes a first insulating layer 50 and a second insulating layer 60, and the first insulating layer 50 and the second insulating layer 60 are respectively located on both sides of the tab 20, so as to prevent electrical connection between the tab 20 and other components.

Specifically, the first insulating layer 50 is located on the outside of the tab 20, one end of the first insulating layer 50 is docked with the first welding mark 21, and the other end of the first insulating layer 50 is located on the main body portion 10, that is, the first insulating layer 50 covers a part of the main body portion 10. Such arrangement can improve the effect of insulating the tab 20 from other components, for example, reduce the creepage distance between the tab 20 and the housing, and enhance the effect of insulating the tab 20 from the housing. Certainly, the disclosure does not exclude the embodiment in which the first insulating layer 50 does not cover the main body portion 10.

Specifically, one end of the second insulating layer 60 is docked with the first welding mark 21, and the other end of the second insulating layer 60 is located on the main body portion 10, that is, the second insulating layer 60 covers a part of the main body portion 10. Certainly, the disclosure does not exclude an embodiment in which the second insulating layer 60 does not cover the main body portion 10.

In an embodiment, the insulating layer may be an insulating tape.

In an embodiment, as shown in FIG. 3, the battery further includes a cover element. The cover element includes a pole 30, and the pole 30 is welded to the tab 20 to form the second welding mark 22. The pole 30 of the battery and the tab 20 are arranged oppositely, that is, the tab 20 is arranged in a protruding manner. Under the circumstances, the pole 30 and the tab 20 are directly connected by welding.

It should be noted that the pole 30 and the tab 20 are directly welded, which eliminates the need for an adapter sheet required in related technologies, thereby reducing material costs, and simplifying the process.

In an embodiment, as shown in FIG. 3, the main body portion portions 10 are arranged in pairs, and the pair of two main body portions 10 are both connected to the tab 20, wherein, the pole 30 is connected to two adjacent tabs 20, so that the two tabs 20 of the two main body portions 10 are led out through one pole 30. The pole 30 can be welded to one of the two adjacent tabs 20 to form a second welding mark 22. The pole 30 can be welded to the two adjacent tabs 20 to form two second welding marks 22, that is, the pole 30 is welded to the tab 20 of one main body portion 10 to form a first one of the second welding marks 22, and the pole 30 is welded to the tab 20 of the other main body portion 10 to form a second one of the second welding marks 22. The two second welding marks 22 may not be overlapped or partially overlapped, the disclosure provides no limitation thereto. The adjacent tabs 20 of the two main body portions 10 are connected by the pole 30, which improves the utilization efficiency of the battery and simplifies the process.

In an embodiment, the battery is composed of a main body portion 10, two tabs 20 connected to both ends of the main body portion 10, and two poles 30 respectively connected to the two tabs 20, and the two tabs 20 are respectively connected to the two poles 30.

In an embodiment, the battery is composed of two main body portions 10, two pairs of tabs 20 connected to both ends of the main body portion 10, and two poles 30 respectively connected to the two pairs of tabs 20. The two poles 30 are respectively connected to the two pairs of tabs 20.

In an embodiment, the two tabs 20 of the main body portion 10 are respectively ultrasonically welded to form two first welding marks 21, as shown in FIG. 1. The first insulating layer 50 is disposed on the tab 20, wherein one end of the first insulating layer 50 is docked with the first welding mark 21, and the other end of the first insulating layer 50 is located on the main body portion 10, as shown in FIG. 2. After the two main body portions 10 are docked with each other, the pole 30 and the tab 20 are connected by laser welding, and the second welding mark 22 is formed in the middle of the first welding mark 21, as shown in FIG. 3.

In an embodiment, as shown in FIG. 6, the battery further includes a cover element, and the cover element includes a connecting portion 40, and the connecting portion 40 is welded to the tab 20 to form the second welding mark 22. The pole of the battery needs to be connected to the tab 20 through the connecting portion 40, that is, the tab 20 extends from a lateral surface of the main body portion 10. Under the circumstances, the connecting portion 40 and the tab 20 are directly connected by welding.

In an embodiment, as shown in FIG. 6, the main body portions 10 are arranged in pairs, and the pair of two main body portions 10 are both connected with the tab 20, wherein the connecting portion 40 connects the two adjacent tabs 20, so that the two tabs 20 of the two main body portions 10 are connected to the pole 30 through a connecting portion 40.

In an embodiment, the battery is composed of a main body portion 10, two tabs 20 connected to both ends of the main body portion 10, and two connecting portions 40 respectively connecting the two tabs 20. The two tabs 20 are respectively connected to the two poles 30 through the two connecting portions 40.

In an embodiment, the battery is composed of two main body portions 10, two pairs of tabs 20 connected at both ends of the main body portion 10, and two connecting portions 40 respectively connecting the two pairs of tabs 20. The two connecting portions 40 are respectively connected to the two pairs of tabs 20.

In an embodiment, the two tabs 20 of the main body portion 10 are respectively welded through ultrasonic welding to form at least two first welding marks 21, as shown in FIG. 4. The first insulating layer 50 is disposed on the tab 20. One end of the first insulating layer 50 is docked with the first welding mark 21, and the other end of the first insulating layer 50 is located on the main body portion 10, as shown in FIG. 2. After the two main body portions 10 are docked with each other, the connecting portion 40 and the tab 20 are connected by laser welding, and the second welding mark 22 is formed in the middle portion of the first welding mark 21, as shown in FIG. 3. It should be noted that, in this embodiment, there are at least two first welding marks 21 on each tab 20, and not all the first welding marks 21 need to be welded for the second time. The first welding mark 21 that is not to be welded for the second time may be covered by the first insulating layer 50.

In an embodiment, as shown in FIG. 4, the tab 20 extends from a lateral surface of the main body portion 10, and the tab 20 is provided with two first welding marks 21 in a direction perpendicular to the extending direction. The two first welding marks 21 are arranged at intervals, and the second welding mark 22 is arranged on one of the two first welding marks 21. The first welding mark 21 is formed by directly pre-welding the tab 20, that is, before the tab 20 and the cover element are welded, the tab 20 is pre-welded, so that the various thin metal sheets of the tab 20 are bonded together, which also enhances the structural strength of the tab 20 to a certain extent. However, if the width of the tab 20 in a direction perpendicular to its extending direction is wide (for example, the tab 20 extends from the lateral surface of the entire main body portion, and the tab 20 is not cut), only one first welding mark is provided on the tab 20 at the portion perpendicular to the extending direction. All the thin metal sheets of the portion of the tab 20 provided with the welding mark are bonded together, but the tabs 20 on both sides of the welding mark are arranged in a loose manner, which is not conducive to the subsequent welding of the tab 20 and the connecting portion. If all the tabs 20 are welded in the direction perpendicular to the extending direction to set the first welding mark, all the thin metal sheets of the portion of the tab 20 provided with the welding mark are bonded together, the tab 20 will become harder, and the tab 20 has less flexibility in the direction perpendicular to its extending direction, which is also not conducive to the realization of the welding process either. In light of the foregoing, the tab 20 is provided with two first welding marks 21 in the direction perpendicular to the extending direction, that is, two first welding marks 21 arranged at intervals are formed in the width direction of the tab 20 through two times of first welding separately, such that all the thin metal sheets of the welded portion are bonded together, but the portions spaced apart are not welded, such that all the thin metal sheets of the portions spaced apart contact each other in a free and loose manner, a good flexibility can be achieved, and the welding process can be better realized. Certainly, there may be three or more first welding marks 21 arranged at intervals. Certainly, the direction perpendicular to the extending direction of the tabs will suffice as long as long it is substantially perpendicular to the extending direction of the tabs, that is, the angle between the direction and the extending direction of the tabs is approximately 90 degrees, and preferably the angle is 80 degrees to 100 degrees.

An embodiment of the disclosure further provides a manufacturing method of battery, and the manufacturing method includes following steps. Pre-welding the tab 20 on the main body portion 10 to form a first welding mark 21 on the tab 20. Welding the pole 30 of the cover element to the tab 20 to form a second welding mark 22 on the tab 20, and the second welding mark 22 is formed to cover at least a part of the first welding mark 21; or, welding the connecting portion 40 of the cover element to the tab 20 to form a second welding mark 22 on the tab 20, and the second welding mark 22 is formed to cover at least a part of the first welding mark 21.

The manufacturing method of battery in an embodiment of the disclosure forms the first welding mark 21 by pre-welding the tab 20, and the cover element and the tab 20 are welded on the first welding mark 21 to form a second welding mark 22, that is, the tab 20 is welded twice, so that the energy of welding can be better controlled and damage to the tab 20 can be avoided.

In an embodiment, the first welding mark 21 is formed by directly pre-welding the tab 20, that is, before the tab 20 and the cover element are welded, the tab 20 is pre-welded, so that all the thin metal sheets of the tab 20 are bonded together, which also improves the structural strength of the tab 20 to a certain extent. In this manner, when the tab 20 and the cover element are welded, even if the energy of welding is relatively high, due to the presence of the first welding mark 21, and the second welding mark 22 is formed on basis of the first welding mark 21, the first welding mark 21 enhances the strength of the tab 20, so that the probability of damage to the tab 20 is significantly reduced during the second welding.

In an embodiment, the first welding mark 21 is formed by pre-welding the tab 20 and the cover element, that is, by performing a single welding with relatively low welding energy, all the thin metal sheets of the tab 20 are bonded together. Certainly, the tab 20 and the cover element are also connected, and then a second welding with a relatively high welding energy is performed, so that the tab 20 and the cover element are stably connected, and the second welding mark 22 is formed on the first welding mark 21. Due to the presence of the first welding mark 21, and the second welding mark 22 is formed on basis of the first welding mark 21, even if the energy of welding is relatively high, since the first welding mark 21 enhances the strength of the tab 20, the probability of causing damage to the tab 20 is significantly reduced during the second welding.

In an embodiment, after forming the first welding mark 21, a first insulating layer 50 is formed on the tab 20, one end of the first insulating layer 50 is docked with the first welding mark 21, and the other end of the first insulating layer 50 is located on the main body portion 10.

In an embodiment, after the first insulating layer 50 is formed on the tab 20, a second insulating layer 60 is provided on one side of the tab 20 away from the first insulating layer 50, one end of the second insulating layer 60 is docked with one end of the first welding mark 21 close to the root of the tab 20, and the other end of the second insulating layer 60 is located on the main body portion 10. By providing insulating layers on both sides of the tab 20, the effect of insulating the tab 20 from other components is enhanced.

In an embodiment, the first welding mark 21 is formed by the first welding, and the second welding mark 22 is formed by the second welding. The first welding method can be performed by adopting any one of ultrasonic welding and laser welding. Correspondingly, the second welding method can be performed by adopting any one of ultrasonic welding and laser welding, as long as the stability of the connection can be ensured and the tab 20 will not be damaged during the first welding.

In an embodiment, the first welding mark 21 is an ultrasonic welding mark, and the second welding mark 22 is a laser welding mark. Specifically, the first welding mark 21 is formed by the first welding, and the second welding mark 22 is formed by the second welding. The first welding method adopts ultrasonic welding. The multiple thin metal sheets of the tab 20 are combined into a whole through ultrasonic effect. It can be considered that multiple thin metal sheets are formed as a whole to become a thick metal plate, which enhances the strength of the tab 20 and avoids the damage to the tab 20. Correspondingly, the second welding method adopts laser welding, and the second welding mark 22 is formed on the first welding mark 21. The cover element is welded to the metal plate formed by the first welding. Through the effect of laser, the metal plate formed by the first welding and the cover element are fixedly connected together, which enhances the strength of the connection. In an embodiment, the manufacturing method of battery is adopted to form the battery described above.

In an embodiment, as shown in FIG. 1 to FIG. 3, the first welding mark 21 is formed on the tab 20 of the main body portion 10 by ultrasonic welding. The first insulating layer 50 is arranged on the tab 20, one end of the first insulating layer 50 is docked with the first welding mark 21, and the other end of the first insulating layer 50 is located on the main body portion 10. After the two main body portions 10 are docked with each other, the pole 30 and the tab 20 are connected by laser welding, and a second welding mark 22 is formed in the middle of the first welding mark 21. After the welding is completed, the housing is packaged.

In an embodiment, as shown in FIG. 4 to FIG. 6, the first welding mark 21 is formed on the tab 20 of the main body portion 10 by ultrasonic welding. The first insulating layer 50 is arranged on the tab 20, one end of the first insulating layer 50 is docked with the first welding mark 21, and the other end of the first insulating layer 50 is located on the main body portion 10. After the two main body portions 10 are docked with each other, the connecting portion 40 and the tab 20 are connected by laser welding, and the second welding mark 22 is formed in the middle of the first welding mark 21. After the welding is completed, the housing is packaged.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery, comprising:
a main body portion (10); and
a tab (20) arranged on the main body portion (10), wherein the tab (20) comprises a first welding mark (21) and a second welding mark (22), and the second welding mark (22) covers at least a part of the first welding mark (21).

2. The battery according to claim 1, wherein
the tab (20) comprises a plurality of metal sheets; and
the first welding mark (21) is formed by pre-welding the tab (20) to combine the plurality of metal sheets.

3. The battery according to claims 1 or 2, wherein the second welding marks (22) are all located in the first welding mark (21).

4. The battery according to claims 1 or 2, wherein the second welding mark (22) is located in a middle portion of the first welding mark (21).

5. The battery according to any one of claims 1-4, wherein the first welding mark (21) and the second welding mark (22) are formed in sequence.

6. The battery according to any one of claims 1-5, wherein the first welding mark (21) and the second welding mark (22) are formed by different welding methods.

7. The battery according to claim 6, wherein the first welding mark (21) is an ultrasonic welding mark, and the second welding mark (22) is a laser welding mark.

8. The battery according to any one of claims 1-7, further comprising:
an insulating layer, wherein at least a part of the insulating layer is arranged on the tab (20);
wherein the tab (20) comprises a joint portion connected with the main body portion (10);
wherein a first end of the first welding mark (21) is close to the joint portion of the tab (20); and
wherein the insulating layer extends from the first end of the first welding mark (21) in a direction away from the first welding mark (21).

9. The battery according to any one of claims 1-8, further comprising a cover element, wherein the cover element comprises:
a pole (30), wherein the pole is welded to the tab (20) to form the second welding mark (22).

10. The battery according to claim 9, wherein the main body portions (10) are arranged in pairs, and the pair of two main body portions (10) are both connected with the tab (20);
the pole (30) is welded to the two adjacent tabs (20).

11. The battery according to any one of claims 1-8, further comprising a cover element, wherein the cover element comprises:
a pole (30); and
a connecting portion (40), wherein the tab (20) is electrically connected to the pole (30) through the connecting portion (40), and the connecting portion (40) is welded to the tab (20) to form the second welding mark (22).

12. The battery according to claim 11, wherein the tab (20) extends from a lateral surface of the main body portion (10), and the tab (20) is provided with the at least two first welding marks (21) at intervals in a direction perpendicular to an extending direction thereof.

13. The battery according to claim 11, wherein the main body portions (10) are arranged in pairs, and the pair of two main body portions (10) are both connected with the tab (20);
the connecting portion (40) is welded to the two adjacent tabs (20).

14. A manufacturing method of a battery, the manufacturing method comprising:
pre-welding a tab (20) on a main body portion (10) to form a first welding mark (21) on the tab (20);
welding a pole (30) of a cover element to the tab (20) to form a second welding mark (22) on the tab (20), wherein the second welding mark (22) is formed to cover at least a part of the first welding mark (21);
or, welding a connecting portion (40) of the cover element to the tab (20) to form the second welding mark (22) on the tab (20), wherein the second welding mark (22) is formed to cover the at least part of the first welding mark (21).

15. A battery, comprising:
a main body portion (10);
a tab (20), wherein the tab (20) extends from a lateral surface of the main body portion (10), and the tab (20) is provided with two first welding marks (21) arranged at intervals in a direction perpendicular to an extending direction thereof; and
a cover element, wherein the cover element comprises a pole (30) and a connecting portion (40), the tab (20) is electrically connected to the pole (30) through the connecting portion (40), the connecting portion (40) is welded to the tab (20) to form a second welding mark (22), and the second welding mark (22) is located in one of the two first welding marks (21).
